# EUROPÄISCHE PATENTSCHRIFT

(11) **EP 2 864 094 B1**
(45) Veröffentlichungstag und Bekanntmachung des Hinweises auf die Patenterteilung: **03.01.2018**
(21) Anmeldenummer: 13729302.3
(22) Anmeldetag: 07.06.2013
(51) Int. Cl.: B29C 44/24, B29C 70/66, B29C 44/32, C08J 9/32, B32B 1/08, C08J 9/08, B32B 27/32, B32B 27/30, B32B 27/06, B29K 105/00

(54) **VERFAHREN ZUR HERSTELLUNG EINES ROHRES**
METHOD FOR MANUFACTURING A PIPE
PROCÉDÉ DE FABRICATION D'UNE GAINE

(30) Priorität: 20.06.2012 DE 102012105351
(43) Veröffentlichungstag der Anmeldung: 29.04.2015
(73) Patentinhaber: Dipl.-Ing. Dr. Ernst Vogelsang GmbH & Co. KG, D-45699 Herten (DE)
(72) Erfinder: VOGELSANG, Horst, 45699 Herten (DE)
(74) Vertreter: Nunnenkamp, Jörg
(86) Internationale Anmeldenummer: PCT/EP2013/061845
(87) Internationale Veröffentlichungsnummer: WO 2013/189767

(56) Entgegenhaltungen:
- EP-A1- 0 692 516
- DE-A1- 10 342 857
- JP-A- 2005 212 377
- JP-A- 2007 246 578
- US-A1- 2003 176 516
- US-A1- 2007 142 486
- US-B1- 6 176 269

## Beschreibung

Die Erfindung betrifft ein Verfahren zur Herstellung eines Rohres, insbesondere eines Kabelführungsrohres, gemäß Anspruch 1. - Bei dem Rohr kann es sich um jedwedes Rohr handeln, beispielweise ein Rohr zur Führung von Medien wie Wasser oder auch Gasen. Besonders bevorzugt kommen Kabelführungsrohre und insbesondere Kabelschutzrohre zur Anwendung.
Ein derartiges Verfahren wird prinzipiell in der US 6 176 269 B1 beschrieben, die sich allgemein mit der Herstellung von Kunststoffrohren befasst. Durch den materialeinheitlichen Aufbau, d.h. einen Aufbau, bei welchem die Rohrinnenwand, die geschäumte Zwischenschicht und auch die Rohraußenwand aus einem gleichen Kunststoffausgangsmaterial hergestellt werden, ist zunächst einmal eine einwandfreie Aufbereitung und ein sortenreines Recycling derartiger Rohre möglich. Außerdem werden homogene Dehnungen in Abhängigkeit von der Temperatur beobachtet. Zur Herstellung der geschäumten Zwischenschicht wird bei dem bekannten US-Dokument so vorgegangen, dass in ein zugehöriges Formwerkzeug ein unter Druck stehendes Gas, wie beispielsweise Stickstoff oder Kohlendioxid, eingebracht wird. Das betreffende Gas wird unter hohem Druck in dem plastifizierten Kunststoffmaterial absorbiert und sorgt für die gewünschte Schaumbildung.
Eine auf diese Weise hergestellte geschäumte Zwischenschicht und auch das zugehörige Rohr sind von ihren mechanischen Eigenschaften her verbesserungsbedürftig. Denn dadurch, dass unter Druck stehendes Gas in die viskose Schmelzphase des Matrixkunststoffes eingepresst und verteilt wird, kann nicht sichergestellt werden, dass die sich bildenden Zellen innerhalb der Schaumstruktur in etwa gleichgroß ausgebildet sind und sich ferner homogen über die geschäumte Zwischenschicht gesehen verteilen. Vielmehr ist damit zu rechnen, dass es zur Clusterbildung kommt und damit mechanisch geschwächte Bereiche in der geschäumten Zwischenschicht beobachtet werden. Das stellt bei der Lehre nach der US 6 176 269 B1 insofern kein Problem dar, weil dort die geschäumte Zwischenschicht größtenteils aus Gründen der Wärmeisolation realisiert wird und mechanische Eigenschaften des auf diese Weise hergestellten Rohres eine nur untergeordnete Rolle spielen.

Wenn es jedoch darum geht, nach dem beschriebenen Verfahren entsprechend der US 6 176 269 B1 Rohre und insbesondere Kabelführungsrohre herzustellen, so spielen insbesondere mechanische Eigenschaften und Belastbarkeiten eine besondere Rolle. Denn Kabelführungsrohre dienen im Allgemeinen dazu, im Innern befindliche Elektrokabel, Telekommunikationskabel etc. beispielsweise unter der Erde, in einer Baugrube usw. zu führen und für eine einwandfreie Verlegung zu sorgen. Dabei können Kabelführungsrohre prinzipiell jegliche Gestalt annehmen, sind meistens jedoch als zylindrische Rohre ausgebildet. Der Mantel der Rohre kann prinzipiell auch Öffnungen aufweisen. Demgegenüber verfügen Kabelschutzrohre als spezielle Kabelführungsrohre regelmäßig über einen geschlossenen Mantel, um einen einwandfreien Schutz der im Innern aufgenommenen Kabel zu gewährleisten.

Kabelführungsrohre aus einem thermoplastischem Kunststoff zur Aufnahme von hauptsächlich Elektrokabeln, Telekommunikationskabeln oder dergleichen und insbesondere ein Kabelschutzrohr zur Aufnahme von Glasfaserkabeln werden beispielsweise in der EP 1 091 463 A1 der Anmelderin beschrieben. Derartige Kabelführungsrohre kommen zum Einsatz, um überwiegend Telekommunikationskabel und hier insbesondere Glasfaserkabel im Zuge ihrer Erdverlegung zu schützen. Die Telekommunikationskabel werden typischerweise unter Einsatz von Pressluft in die fraglichen Kabelführungsrohre eingezogen. Dabei wird oftmals mit einem Innendruck innerhalb der Kabelführungsrohre von mehr als 10 bar (mehr als 1 MPa) gearbeitet.

Aus diesem Grund müssen Kabelführungsrohre bzw. Kabelschutzrohre einerseits druckdicht ausgelegt sein und andererseits an ihrer Kanalinnenwand bzw. Rohrinnenwand eine geringe Reibung aufweisen. Zu diesem Zweck wird bei der gattungsbildenden Lehre nach der EP 1 091 463 A1 an der Rohrinnenwand mit Gleitrippen für die einzuziehenden Telekommunikationskabel gearbeitet. Mit Hilfe dieser Gleitrippen wird die Reibung zwischen der Kanalinnenwand bzw. Rohrinnenwand und dem jeweils einzuziehenden Telekommunikationskabel verringert.

Kabelführungsrohre und insbesondere Kabelschutzrohre werden heutzutage überwiegend aus Polyolefinen hergestellt, also aus Polymeren, die aus Alkenen (Olefinen), wie Ethylen, Propylen usw. durch Polymerisation produziert worden sind. Bei Polyolefinen handelt es sich um teilkristalline Thermoplaste, die sich leicht verarbeiten lassen und sich durch eine gute chemische Beständigkeit und besondere elektrische Isoliereigenschaften auszeichnen, was für die zuvor beschriebenen Einsatzzwecke zum Schutz von Telekommunikationskabeln von besonderer Bedeutung ist. Im Rahmen der DIN 16876 werden Rohre und Formstücke aus Polyethylen hoher Dichte (PE-HD) für erdverlegte Kabelschutzrohrleitungen näher definiert. Tatsächlich kommt es bei solchen erdverlegten Rohren nicht nur auf die bereits angesprochene Recyclefähigkeit an, sondern spielen insbesondere mechanische Eigenschaften wie die Zugfestigkeit oder auch der erreichbare Elastizitätsmodul und die Streckspannung eine besondere Bedeutung. Die Zugfestigkeit ist vor dem Hintergrund wichtig, dass beispielsweise beim Einblasen von Telekommunikationsleitungen in die Rohre ein gegenseitiges Ausziehen der Rohre verhindert wird und/oder beim Einziehen respektive Verlegen der fraglichen Telekommunikationsleitungen die Rohre nicht gedehnt werden. Aus diesem Grund kommt es auch darauf an, dass die Rohre und ihre Verbindungselemente bei 20°C mindestens einem Innendruck von 10 bar (1 MPa) standhalten.

Bei einem ebenfalls gattungsgemäßen Verfahren zur Herstellung eines Rohres entsprechend der US 4 449 875 werden in der dortigen Spalte 15, Zeilen 58 bis 61 verschiedene Treibmittel zur Herstellung der geschäumten Zwischenschicht angesprochen. An dieser Stelle können feste, flüssige oder auch gasförmige Zusätze Verwendung finden. Weitere Einzelheiten oder Besonderheiten des Treibmittels finden keine Erwähnung und sind auch nicht untersucht worden.

Die beschriebenen Anforderungen an Kabelführungsrohre und insbesondere Kabelschutzrohre werden bisher und in der Praxis praktisch ausschließlich von Rohren aus Vollmaterial zur Verfügung gestellt. Denn das bekannte Rohr entsprechend der US 6 176 269 B1 dürfte den bei einer Erdverlegung sich einstellenden Belastungen nicht standhalten, weil damit zu rechnen ist, dass die geschäumte Zwischenschicht über eine inhomogenen Aufbau verfügt. - In der Praxis stellt sich jedoch zunehmend das Problem bzw. die Anforderung, dass Herstellungskosten für die Rohre und insbesondere Kabelführungsrohre reduziert werden sollen. Zugleich kommt es darauf an, die Handhabung bei der Verarbeitung und insbesondere Erdverlegung zu vereinfachen.
Der weitere Stand der Technik nach der JP 2005/212377 A befasst sich mit einer mehrschichtigen Leichtgewichtsplatte, dessen Zwischenschicht aus einer Schaumstruktur aufgebaut ist. Zur Herstellung der Zwischenschicht kommen ein chemisches Treibmittel und ein physikalisches Treibmittel auf Basis von Microkapseln zum Einsatz.
Der Erfindung liegt das technische Problem zugrunde, ein derartiges Verfahren zur Herstellung eines Rohres und insbesondere eines Kabelführungsrohres so weiterzuentwickeln, dass die Herstellungskosten gegenüber bisherigen Vorgehensweisen verringert sind und außerdem die Handhabung vereinfacht.

Zur Lösung dieser technischen Problemstellung ist ein Verfahren zur Herstellung eines Rohres gemäß Anspruch 1 vorgegeben. Sowohl das chemische Treibmittel als auch das physikalische Treibmittel sind meistens auf Basis thermisch instabiler Feststoffe hergestellt. Außerdem handelt es sich bei dem physikalischen Treibmittel um expandierbare Microsphären. Im Gegensatz zum Stand der Technik nach der US 6 176 269 B1 wird die geschäumte Zwischenschicht bei der Erfindung also nicht dadurch hergestellt, dass beispielsweise ein unter Druck stehendes Gas in die viskose Schmelzphase eingepresst und hierin verteilt wird. Vielmehr ist das Kunststoffausgangsmaterial zur Herstellung der geschäumten Zwischenschicht bzw. das aufzuschäumende Granulat von vornherein mit thermisch instabilen Feststoffen als Treibmittel ausgerüstet. Dabei kommen im Rahmen der Erfindung sowohl chemische Treibmittel als auch physikalische Treibmittel zum Einsatz.

Bei den chemischen Treibmitteln handelt es sich typischerweise um solche auf Basis von Kohlenwasserstoffen mit einer Zersetzungstemperatur oberhalb von 100°C. Meistens werden an dieser Stelle Carbonate und/oder Citrate, beispielsweise Natriumbicarbonat und/oder auch Natriumcitrat eingesetzt.

Um die Verarbeitung zu vereinfachen, handelt es sich bei dem jeweiligen chemischen Treibmittel um eine Kohlenwasserstoffverbindung mit einer Zersetzungstemperatur oberhalb von 100°C, die bei Raumtemperatur als Granulat vorliegt respektive vorliegen kann und auf diese Weise dem ebenfalls in Granulatform zur Verfügung stehenden Kunststoffausgangsmaterial unschwer beigemischt werden kann. Tatsächlich wird in diesem Zusammenhang mit einem Mischungsverhältnis derart gearbeitet, dass das chemische Treibmittel dem aufzuschäumenden Granulat zu 0,1 bis 3 Masse-%, bezogen auf die Gesamtmasse des Granulates für das Rohr zugegeben wird. Das geschieht typischerweise außerhalb oder eingangsseitig eines entsprechenden Formwerkzeuges, beispielsweise eines Extruders.

Bei dem beschriebenen chemischen Treibmittel auf Basis von Carbonat/Citrat handelt es sich größtenteils um ein endothermes Treibmittel, also ein solches, welches Wärme für die Zersetzung benötigt. Die Zersetzung spielt sich dabei in einem weiten Temperaturbereich von ca. 130°C bis zu mehr als 200°C, insbesondere bis zu ca. 200°C ab. Dabei wird eine Gasausbeute bei 220°C für das beschriebene chemische Treibmittel von ca. 120 ml/g beobachtet. Das Schüttgewicht des in Granulatform vorliegenden und dem Kunststoffausgangsmaterial beigemischten chemischen Treibmittels ist im Bereich von ca. 450 g/l angesiedelt und liegt damit in einem vergleichbaren Bereich wie beispielsweise Polyethylen in Granulatform, dessen Schüttgewicht bei ca. 500 g/l angesiedelt ist. Auf diese Weise kann das genannte chemische Treibmittel in Granulatform problemlos und homogen mit dem Kunststoffausgangsmaterial, beispielsweise Polyethylen (PE) in Granulatform, gemischt werden.

Wie bereits erläutert, liegt das chemische Treibmittel im Kunststoffausgangsmaterial in einem Anteil von 0,1 bis 3 Masse-%, bezogen auf die Gesamtmasse, vor. Bei dem chemischen Treibmittel handelt es sich um ein solches in Granulatform, also ein Treibmittel auf Basis eines oder mehrerer thermisch instabiler Feststoffe. Tatsächlich werden Zersetzungstemperaturen von mehr als 100°C für das chemische Treibmittel beobachtet, wobei im Regelfall mehr als 100 ml Gas je Gramm chemisches Treibmittel bei der Zersetzung entstehen. Die fragliche Zersetzungstemperatur von 100°C wird typischerweise im Formwerkzeug zur Herstellung des Rohres ohnehin erreicht, weil solche Temperaturen für die schmelzende Verarbeitung des Kunststoffmaterials in Granulatform erforderlich sind.

Zu diesem zumindest einen chemischen Treibmittel in dem aufzuschäumenden Kunststoffmaterial kommt nun erfindungsgemäß und zusätzlich obligatorisch ein physikalisches Treibmittel auf Basis expandierbarer Microsphären zum Einsatz. D.h., in dem granularen Kunststoffausgangsmaterial für die Herstellung der erfindungsgemäßen Rohre bzw. deren geschäumter Zwischenschicht finden sich sowohl ein oder mehrere chemische Treibmittel mit den zuvor beschriebenen Eigenschaften als auch ein oder mehrere physikalische Treibmittel. Als physikalisches Treibmittel empfiehlt die Erfindung expandierbare Microsphären, also eine Art expandierbare Microballons, deren Einsatz für Schäumverfahren grundsätzlich bekannt ist (vgl. DE 34 36 592 A1).

Tatsächlich zeichnen sich solche expandierbaren Microsphären dadurch aus, dass sie problemlos in das Kunststoffausgangsmaterial eingearbeitet werden können und ihre Expansion unter Wärmeeinwirkung erfolgt. Dabei geht die Erfindung davon aus, dass in dem Formwerkzeug bzw. dem Extruder oder der Spritzgussmaschine durch die darin erzeugten hohen Scherkräfte vor dem Schmelzen des Kunststoffausgangsmaterials die expandierbaren Microsphären nicht zerstört werden und ihre Expansion durch den damit verbundenen hohen Druck unterdrückt wird. Erst nach Verlassen einer zugehörigen Extrusions- bzw. Spritzdüse erfolgt die gewünschte Expansion der bisher nicht expandierten Microsphären.

Diese Expansion lässt sich im Kern darauf zurückführen, dass es sich bei den Microsphären um expandierbare Microhohlkörper handelt, beispielsweise solche aus einer Polyacrylnitrilhülle und darin eingeschlossenem Isopentan. Grundsätzlich können als physikalische Treibmittel auch Kunststoffpolymere eingesetzt werden, deren Partikel expandierbare Hohlkörper darstellen, die nach dem Aufschäumen eine Volumenvergrößerung etwa um das 40- bis 60fache ihres Ausgangsvolumens erfahren und eine elastische Wandung besitzen.

Im Gegensatz zu dem eingesetzten chemischen Treibmittel, welches sich bei Wärmeeinwirkung thermisch zersetzt, behält das zusätzlich in das Kunststoffausgangsmaterial eingebrachte physikalische Treibmittel im Wesentlichen seine Form bei und erfährt lediglich eine Volumenexpansion. Diese kann - wie beschrieben - im Bereich des 40- bis 60fachen des Ausgangsvolumens liegen. Generell kommen als Microsphären Microballons aus thermoplastischen Kunststoffen zum Einsatz, die mit niedrig siedenden Flüssigkeit oder unter Druck stehenden Gasen gefüllt sind, z.B. Pentan und Butan. Die Hüllen der betreffenden Kunststoffhohlkörper respektive der Microsphären bestehen aus besonders diffusionsbeständigen thermoplastischen Polymeren, wie beispielsweise Polyvinylidenchlorid, Polyacrylnitril oder Kombinationen solcher diffusionsbeständiger Polymere.

Das zusätzlich zu dem chemischen Treibmittel eingesetzte physikalische Treibmittel liegt ebenfalls in Festkörperform und zwar als Granulat vor. Dabei beobachtet man vergleichbare Schüttgewichte wie im Falle des chemischen Treibmittels im Bereich von ca. 450 g/l. Dadurch lassen sich sowohl das physikalische als auch das chemische Treibmittel problemlos mit dem Kunststoffausgangsmaterial wie beschrieben mischen. Die Expansionstemperatur des physikalischen Treibmittels ist, ebenso wie die Zersetzungstemperatur des chemischen Treibmittels, typischerweise oberhalb von 100°C angesiedelt. Meistens wird eine Expansionstemperatur im Bereich von 140°C bis 200°C beobachtet. Die Granulate in einerseits dem Kunststoffausgangsmaterial und andererseits den chemischen und physikalischen Treibmitteln liegen meistens in einer Partikelgröße von 100 µm bis 5.000 µm vor. Für die Microsphären, welche die Basis des physikalischen Treibmittels darstellen bzw. welche das physikalische Treibmittel insgesamt definieren, empfiehlt die Erfindung, dass die fraglichen Microsphären respektive expandierbaren Mikrohohlkörper eine räumliche Ausdehnung von weniger als 5000 µm aufweisen. Besonders bevorzugt ist die räumliche Ausdehnung bzw. der Durchmesser der einzelnen meistens kugelförmigen Mikrohohlkörper im Bereich unterhalb von 1000 µm angesiedelt. Im Regelfall besetzen die Microsphären bzw. kugeligen Mikrohohlkörper typischerweise einen Durchmesserbereich von 100 µm bis 1000 µm.

Für den Zusatz des chemischen Treibmittels empfiehlt die Erfindung einen Anteil von ebenfalls 0,1 bis 3 Masse-%, bezogen auf die Gesamtmasse des Rohres. D.h., sowohl das chemische als auch das physikalische Treibmittel werden dem aufzuschäumenden Granulat bzw. dem granularen Kunststoffausgangsmaterial zu jeweils 0,1 bis 3 Masse-%, jeweils bezogen auf die Gesamtmasse des Rohres, zugegeben. Bei den im Rahmen der Expansion des physikalischen Treibmittels freiwerdenden Gasen handelt es sich typischerweise um Kohlenwasserstoffe, die jedoch aufgrund der expandierenden Hülle der Microsphären im Regelfall nicht frei werden. Dagegen korrespondiert die Zersetzung des chemischen Treibmittels im Allgemeinen dazu, dass Kohlendioxid und Wasser bei der Zersetzung gebildet werden, was als insgesamt unbedenklich einzustufen ist.

Die erfindungsgemäße Kombination von einerseits dem beschriebenen chemischen Treibmittel und andererseits dem physikalischen Treibmittel führt im Ergebnis dazu, dass eine besonders homogene zelluläre Struktur der geschäumten Zwischenschicht beobachtet wird. Das lässt sich im Kern darauf zurückführen, dass im Formwerkzeug das chemische Treibmittel unmittelbar zersetzt wird, weil an dieser Stelle die für die Zersetzung notwendigen Temperaturen (mehr als 100°C) mehr oder minder deutlich überschritten werden. Dagegen wird die Expansion des physikalischen Treibmittels zunächst noch verzögert, weil der im Formwerkzeug vor einer zugehörigen Extrusionsdüse herrschende Druck die Expansion der Microsphären mehr oder minder wirksam unterdrückt.

D.h., in einer ersten Expansionsphase sorgt hauptsächlich das durch die Zersetzung des chemischen Treibmittels freiwerdende Gas für die Ausbildung der zellulären Struktur in der aufzuschäumenden Zwischenschicht. Erst in einer zweiten und sich daran anschließenden Expansionsphase jenseits der Extrusionsdüse im Beispielfall kommt es dann zusätzlich dazu, das die Microsphären expandieren und auf diese Weise die zwischen den bereits gebildeten Zellen verbleibenden Volumina der geschäumten Zwischenschicht ausfüllen.

Auf diese Weise kommt es dazu, dass eine insgesamt gleichmäßige zelluläre Struktur der geschäumten Zwischenschicht beobachtet wird. Tatsächlich wechseln sich die auf die Zersetzung des chemischen Treibmittels zurückzuführenden Blasen einerseits und die Microsphären mit ihren nach wie vor vorhandenen Membranen andererseits untereinander ab. Dadurch wird insbesondere verhindert, dass die durch das chemische Treibmittel entstehenden Blasen Cluster im Innern der geschäumten Zwischenschicht bilden, die letztlich zu einer mechanischen Schwächung an dieser Stelle korrespondieren.

Der zuvor geschilderte Sachverhalt wird anhand der nachfolgend wiedergegebenen Bilder verdeutlicht. In den Figuren ist Folgendes dargestellt:
- **Fig. 1 und 2**: zeigen ein erfindungsgemäß eingesetztes Formwerkzeug bzw. Extrusionswerkzeug in einer Übersicht (Fig. 1) und einer Detailansicht (Fig. 2) und
- **Fig.3**: das auf diese Weise hergestellte Rohr und insbesondere Kabelschutzrohr in einer perspektivischen Ansicht;
- **Fig. 4 und 5**: zeigen ein nicht erfindungsgemäßes Vergleichsbeispiel, bei dem die geschäumte Zwischenschicht durch Microsphären alleine (d. h. ohne zusätzliches chemisches Treibmittel) in einer PE-Matrix zu erkennen sind;
- **Fig.6**: zeigt ebenfalls ein nicht erfindungsgemäßes Vergleichsbeispiel mit einer PE-Matrix bzw. geschäumten Zwischenschicht, die lediglich unter Rückgriff auf ein chemisches Treibmittel hergestellt worden ist und
- **Fig. 7 und 8**: zeigen eine nach dem erfindungsgemäßen Verfahren hergestellte Zwischenschicht bzw. PE-Matrix, welche durch die kombinierte Wirkung eines chemischen und physikalischen Treibmittels hergestellt worden ist.

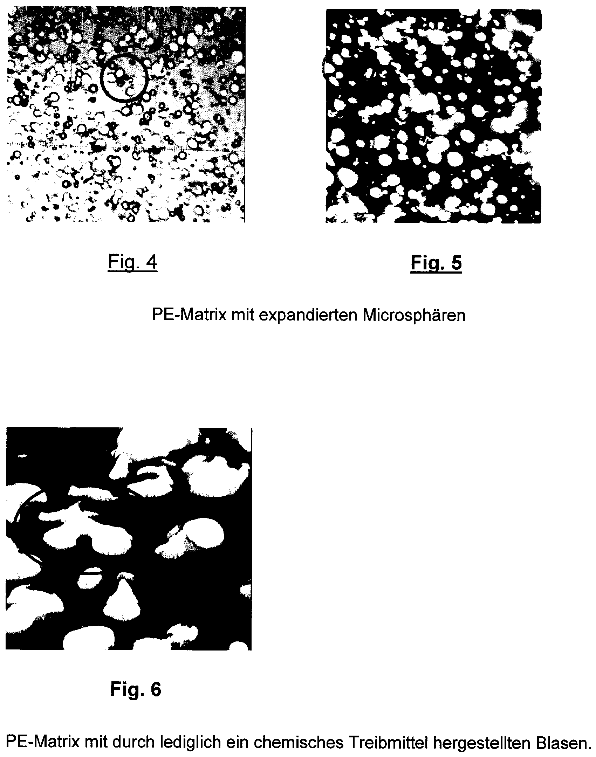

Der zuvor geschilderte Sachverhalt wird anhand der nachfolgend wiedergegebenen Figuren verdeutlicht. Man erkennt in den anschließend eingeblendeten Figuren 4 und 5, wie sich die Microsphären alleine (d.h. ohne zusätzliches chemisches Treibmittel) in einer PE-Matrix verhalten. Anhand der jeweils eingekreisten Bereiche ist zu erkennen, dass die Microsphären kleine perfekt geformte Blasen mit Membrantrennschichten bilden. In diesem Fall ist also ein PE (Polyethylen)-Ausgangsmaterial ausschließlich mit einem physikalischen Treibmittel entsprechend der Erfindung im Bereich seiner geschäumten Zwischenschicht aufgeschäumt worden.

Dagegen zeigt die nachfolgend wiedergegebene Figur 6 eine Situation, bei welcher eine PE-Matrix lediglich mit einem chemischen Treibmittel aufgeschäumt worden ist. Anhand der Figur 6 erkennt man, dass sich auf diese Weise große sowie unförmig geformte Blasen bilden, die dazu neigen, Cluster zu formen, wie dies der eingekreiste Bereich deutlich macht.

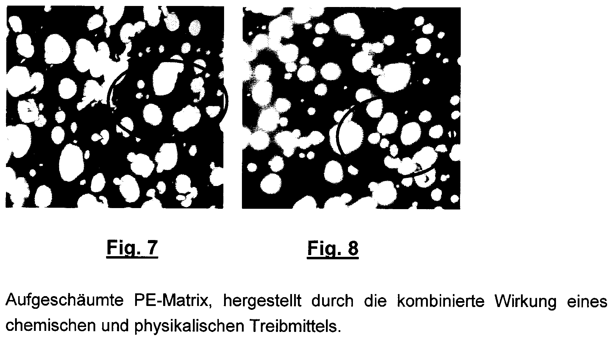

Schließlich stellen die nachfolgend wiedergegebenen Figuren 7 und 8 die Situation dar, wie sie im Rahmen der Erfindung bei der dort realisierten geschäumten Zwischenschicht vorliegt. Tatsächlich wird die geschäumte Zwischenschicht entsprechend den Figuren 7 und 8 durch die Kombination des chemischen Treibmittels und die Mircosphären des physikalischen Treibmittels wiederum in einer PE-Matrix erzielt. Dabei liegen beide Treibmittel jeweils in einer Mischungskonzentration von ca. 1 Masse-% bezogen auf die Gesamtmasse des Ausgangsgranulates, vor Außerdem handelt es sich um Treibmittel, wie sie mit Bezug zur am Schluss angegebenen Tabelle zum Einsatz gekommen sind.

Man erkennt anhand der Figuren 7 und 8, dass sich große und auf das chemische Treibmittel zurückzuführende Blasen mit kleinen Microsphären - verursacht durch das physikalische Treibmittel - abwechseln und insgesamt eine gleichmäßige Schaumverteilung beobachtet wird (siehe Kreise). Dem Ausgangsmaterial wird zusätzlich ein Nukleierungsmittel zugegeben. Bei dem Nukleierungsmittel handelt es sich typischerweise um einen pulverförmigen Feststoff, beispielsweise Kohlenstaub, welcher kostengünstig zur Verfügung steht. Tatsächlich sind Kunststoffgranulate oftmals ohnehin mit Ruß bzw. Kohlenstaub versetzt, welcher als UV-Stabilisator dient und im Rahmen der Erfindung zusätzlich als Keimbildungsmittel für die sich ausbildenden Zellen in der geschäumten Zwischenschicht.

Das Nukleierungsmittel wird in einem Anteil von bis zu 3 Masse-%, bezogen auf die Gesamtmasse des Rohres, zugegeben. Mit Hilfe des Nukleierungsmittel bzw. der einzelnen pulverförmigen Bestandteile stehen Keime zur Verfügung, und zwar primär für die Ausbildung der sich aufgrund der Zersetzung des chemischen Treibmittels bildenden Blasen.

Schließlich kann der granularen Masse zur Herstellung des Rohres auch ein zusätzliches Additiv hinzugefügt werden. Dieses Additiv mag die Schaumbildung unterstützen. Tatsächlich kann mit Hilfe des Additivs die Schaumbildung beispielsweise innerhalb des Formwerkzeuges größtenteils unterdrückt und erst beim Austritt aus dem Formwerkzeug zugelassen werden. Alternativ oder zusätzlich kann mit Hilfe des Additivs auch die zelluläre Stabilität der Zwischenschicht gesteigert werden.

Die erstgenannte Eigenschaft des Additivs zur Unterdrückung der Schaumbildung im Formwerkzeug, insbesondere zur Verhinderung der Expansion der nicht expandierten Microsphären, wird dadurch umgesetzt, dass dem granularen Kunststoffausgangsmaterial weiche und/oder niedrig schmelzende Kunststoffe und/oder unvulkanisierte Kautschuke mit einem Masseanteil von bis 1 Masse-%, bezogen auf die Gesamtmasse des Rohres, zugegeben werden. Mit Hilfe dieser weichen und/oder niedrig schmelzenden Kunststoffe und/oder unvulkanisierten Kautschuke wird der Aufbau von Druck noch vor dem Schmelzen des Matrixkunststoffes im Formwerkzeug ermöglicht. Zugleich wird die Expansion der Microsphären in dem betreffenden Formwerkzeug, d.h. dem Extruder oder der Spritzgussmaschine, wirksam verhindert. Darüber hinaus sorgen diese Anteile dafür, dass die Einwirkung von Scherkräften auf die Microsphären weitgehend vermieden wird. Auf diese Weise wird insgesamt das Expansionsvermögen der nicht expandierten Microsphären für das scherwirkungsfreie Stadium nach dem Verlassen der Extruder- oder Spritzdüse bewahrt. Dadurch können die nicht expandierten Microsphären zur Ausbildung der angestrebten Schaumstruktur im Bereich der geschäumten Zwischenschicht nahezu vollständig nutzbar gemacht werden.

Als weiche und/oder niedrig schmelzende Kunststoffe oder unvulkanisierte Kautschuke können Ethylen-Vinylacetat-Copolymere, Ethylen-Propylen-Kautschuke, Polybutadien, oder auch Ethylen-Acrylat-Copolymere zum Einsatz kommen.

Alternativ oder zusätzlich sorgen die verwendeten Additive dafür, dass die geschäumte Zwischenschicht über eine stabile zelluläre Struktur verfügt. In diesem Fall können sogenannte Schaumstabilisatoren Verwendung finden, bei denen es sich typischerweise um siliciumorganische Verbindungen, sogenannte Polyether-Polysiloxane, handelt. Diese siliciumorganischen Verbindungen haben eine oberflächenaktive Wirkung, können aber auch als Emulgatoren fungieren. Mit Hilfe der Schaumstabilisatoren lässt sich die Schaumstruktur, die Offen- und Geschlossenzelligkeit und die Zellgröße in gewissen Grenzen steuern.
Schließlich fallen unter den Begriff Additiv auch Aktivatoren, mit deren Hilfe beispielsweise die Zersetzung des chemischen Treibmittels unterstützt und beschleunigt werden kann. Solche Beschleuniger bzw. Aktivatoren sind beispielsweise tertiäre Amine oder auch Alkalisalze aliphatischer Carbonsäuren. Mit ihrer Hilfe kann der Reaktions- und Schäumverlauf den Anforderungen entsprechend gesteuert werden.
In jedem Fall wird das granulare Ausgangsmaterial zusammen mit den beiden Treibmitteln, nämlich dem chemischen und physikalischen Treibmittel und dem Nukleierungsmittel sowie dem Additiv im Formwerkzeug durch eine ringförmige Coextrusionsdüse extrudiert. Dabei werden sowohl die Rohrinnenwand als auch die Rohraußenwand ebenso wie die dazwischen befindliche geschäumte Zwischenschicht gemeinsam hergestellt. Da die Rohrinnenwand, die Rohraußenwand und die Zwischenschicht materialeinheitlich aufgebaut sind, kommt ein durchgängig gleiches Kunststoffausgangsmaterial zur Anwendung.

Kurz nach dem Verlassen der Extrusionsdüse expandiert das im Kunststoffmaterial für die Zwischenschicht fein verteilte Treibmittel bzw. expandieren die beiden Treibmittel, so dass sich im ausbildenden Kunststoffschaumkörper feinste Zellen bilden. Je nach den Verfahrensbedingungen hinsichtlich der Temperatur und der Extrusionsgeschwindigkeit werden mehr oder weniger große Bläschen in der auf diese Weise realisierten geschäumten Zwischenschicht zwischen der Rohrinnenwand und der Rohraußenwand definiert. Das in den erzeugten Zellen eingeschlossene Gas stammt typischerweise von der Zersetzung des chemischen Treibmittels, weshalb es sich hierbei regelmäßig um Kohlendioxid und Wasser handelt. Demgegenüber bleiben die bei der Expansion der physikalischen Treibmittel entstehenden Kohlenwasserstoffe innerhalb der gebildeten Membranen eingeschlossen.

Auf diese Weise wird eine homogene Zellstruktur der geschäumten Zwischenschicht zur Verfügung gestellt, die nicht nur über hervorragende Wärmeisolationseigenschaften verfügt, sondern das auf diese Weise realisierte Rohr derart ertüchtigt, dass praktisch gleiche mechanische Eigenschaften wie für ein Rohr aus Vollmaterial beobachtet werden. Tatsächlich verfügt das erfindungsgemäße Rohre über einen vergleichbaren E-Modul, eine ähnliche Innendruckbeständigkeit sowie vergleichbare Zugfestigkeiten und Streckspannungen wie ein gleich aufgebautes Rohr aus Vollmaterial. So verfügt das erfindungsgemäße Rohr regelmäßig über eine Zugfestigkeit von mehr als 5.000 N, insbesondere sogar mehr als 8.000 N. Der E-Modul ist im Bereich von mehr als 500 MPa, insbesondere sogar bei mehr als 700 MPa angesiedelt. Die Streckspannung nimmt Werte von wenigstens 15 MPa, insbesondere 18 MPa, an.

Das alles gelingt unter Berücksichtigung einer deutlichen Materialersparnis, die je nach Anteil der geschäumten Zwischenschicht an dem hergestellten Rohr im Bereich von ca. 20 Gew.-% und mehr an erforderlichem Kunststoffausgangsmaterial liegen kann. Tatsächlich verfügen Rohre aus Vollmaterial bei einem Durchmesser von 50 mm und einer Wandstärke von ca. 5 mm über ein Rohrgewicht von in etwa 0,7 kg/m. Demgegenüber weist das erfindungsgemäße Rohr vergleichbarer Abmessungen ein Rohrgewicht von lediglich noch 0,5 kg/m und weniger auf. D.h., das längenbezogene Rohrgewicht ist um nahezu 30 % reduziert worden.

Zugleich sinkt natürlich auch der Materialeinsatz an primärem granularen Kunststoff. Der demgegenüber erforderliche Zusatz der beiden Treibmittel, des Nukleierungsmittel sowie des einen oder der mehreren Additive führt in diesem Zusammenhang nicht dazu, dass der Gesamtpreis pro Längeneinheit gegenüber einem Rohr aus Vollmaterial steigt. Ganz im Gegenteil wird je nach Rohstoffkosten eine Preisreduktion von wenigstens 10 % im Vergleich zu dem Rohr aus Vollmaterial beobachtet. Zugleich erleichtert das verringerte längenbezogene Gewicht die Handhabung und wirkt sich positiv bei der Verarbeitung aus. Tatsächlich werden solche Rohre typischerweise in der Erde verlegt, müssen also von Personal und/oder Maschinen bewegt werden.
Der Rückgriff auf sowohl ein chemisches als auch ein physikalisches Treibmittel sorgt insgesamt für eine ausgeprägte Zellenstruktur und die beobachtete Materialersparnis von bis zu 30 Gew.-%. Eine solche ließe sich mit Hilfe des physikalischen Treibmittels auf Basis nicht expandierter Microsphären alleine nicht so einfach bzw. nur zu gesteigerten Kosten im Vergleich zu der erfindungsgemäßen Lösung realisieren. Umgekehrt führt der Rückgriff auf ein chemisches Treibmittel alleine zu den bereits beschriebenen mechanischen Problemen, die sich im Kern auf die Clusterbildung von einzelnen Blasen an dieser Stelle zurückführen lassen.

Bei dem chemischen Treibmittel kann es sich um ein endothermes oder auch exothermes Treibmittel handeln. Im Allgemeinen kommt ein endothermes chemisches Treibmittel zum Einsatz. Hierbei geht die Erfindung von der Erkenntnis aus, dass im Formwerkzeug das granulare Kunststoffausgangsmaterial bzw. Polyolefin nur eine sehr geringe Fließfähigkeit bei Temperaturen unterhalb des Schmelzpunktes aufgrund der hohen Kristallinität aufweist. Demgegenüber sind Polyolefine bei Temperaturen oberhalb der Schmelztemperatur leicht fließend. Es kommt deshalb darauf an, eine zum Verschäumen geeignete Temperatur möglichst gut auszubalancieren. Da darüber hinaus Polyolefine große Mengen an Kristallisationswärme bei ihrem Übergang vom Schmelzzustand in den festen Zustand entwickeln, ist es schwierig, sie rasch zu verfestigen. Aus diesen Gründen lassen sich Polyolefinschaumstoffe mit hohem Ausdehnungsgrad, d.h. niedriger Dichte, nur unter erhöhten Schwierigkeiten darstellen.

Dies gelingt im Rahmen der Erfindung dennoch, und zwar durch die ausbalancierte Wirkung der beiden Treibmittel, nämlich des üblicherweise endothermen chemischen Treibmittels in Verbindung mit dem physikalischen Treibmittel. Tatsächlich expandiert in einer ersten Phase primär das chemische Treibmittel und sorgt aufgrund seines endothermen Charakters dafür, dass zugleich die freiwerdende Kristallisationswärme des Polyolefins bei der anschließenden Verfestigung aufgenommen wird. Beim Verlassen der Extrusionsdüse expandieren dagegen primär die nicht expandierten Microsphären des physikalischen Treibmittels. Ihre Expansion ist zuvor innerhalb des Formwerkzeuges durch den dort herrschenden Druck mehr oder minder wirksam verhindert worden. Sobald das Extrudat bzw. das fertige Rohre die Extrusionsdüse verlässt, können nun allerdings die zuvor nicht expandierten Microsphären ihren Querschnitt wie beschrieben vervielfachen und füllen hierbei die noch verbliebenen Zwischenräume zwischen den durch das chemische Treibmittel erzeugten Blasen in der Zellstruktur aus.

Dabei ist zugleich zu berücksichtigen, dass die Wärmekapazität der Microsphären deutlich unterhalb derjenigen der Granulate des Kunststoffausgangsmaterials liegt. Als Folge hiervon ist damit zu rechnen, dass die Microsphären über ihren Gesamtquerschnitt deutlich schneller als die Kunststoffpartikel erwärmt werden, folglich auch noch nach Verlassen der Extrusionsdüse die für ihre Expansion notwendige Wärme zur Verfügung steht, zumal bei der allmählichen Verfestigung des Kunststoffes zugleich dessen Kristallisationswärme für die Expansion der Microsphären zur Verfügung steht.

Jedenfalls ist es im Rahmen der Erfindung gelungen, ein besonders ausbalanciertes Verhältnis von chemischem und physikalischem Treibmittel zur Verfügung zu stellen, um die Herstellung von Rohren und insbesondere Kabelführungsrohren sowie vorzugsweise Kabelschutzrohren zur Aufnahme von hauptsächlich Elektrokabeln, Telekommunikationskabeln bzw. von Glasfaserkabeln zu ermöglichen.

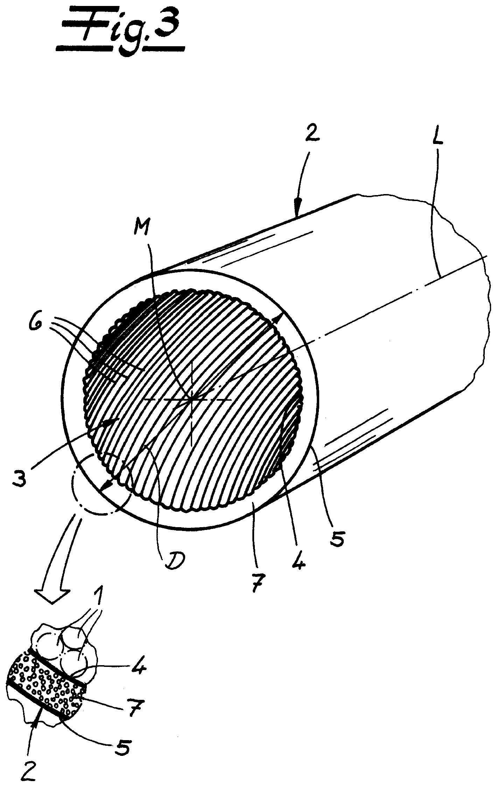

In der Fig. 3 ist ein Rohr, nach dem Ausführungsbeispiel ein Kabelführungsrohr, aus einem thermoplastischem Kunststoff dargestellt. Das Kabelführungsrohr ist als Kabelschutzrohr ausgebildet und dient zur Aufnahme von lediglich in der Fig. 3 angedeuteten Telekommunikationskabeln 1. Bei diesen Telekommunikationskabeln 1 handelt es sich nicht einschränkend um Glasfaserkabel 1.

Das Rohr bzw. Kabelführungsrohr verfügt über einen zylindrischen Mantel 2 im Vergleich zu einer Längsachse L. Tatsächlich ist das Kabelführungsrohr mit seinem Mantel 2 im Querschnitt kreisförmig ausgelegt und definiert auf diese Weise einen entsprechenden kreisförmigen Kabelführungskanal 3 für das bzw. für die Glasfaserkabel 1 im Innern. Tatsächlich verfügt das Kabelführungsrohr bzw. dessen Mantel 2 über einen insgesamt rotationssymmetrischen Aufbau im Vergleich zur Längsachse L, die durch einen Mittelpunkt M des Rohres hindurchgeht.

Das Rohr weist einen wenigstens dreischichtigen Aufbau aus einer Rohrinnenwand 4, einer Rohraußenwand 5 und einer geschäumten Zwischenschicht 7 auf. Die Rohrinnenwand 4 und die Rohraußenwand 5 schließen zwischen sich die geschäumte Zwischenschicht 7 ein, wie ergänzend anhand der vergrößerten Detailansicht in Fig. 3 deutlich wird. Das Kabelführungsrohr ist insgesamt materialeinheitlich aufgebaut, setzt sich also aus einem gleichen Kunststoff zur Realisierung der Rohrinnenwand 4, der Rohraußenwand 5 sowie der geschäumten Zwischenschicht 7 zusammen.

Im Ausführungsbeispiel wird das dargestellte Rohr aus Polyethylen und insbesondere PE-HD hergestellt, wobei selbstverständlich auch Variationen derart umfasst sind, dass unterschiedliche Typen, wie beispielsweise PE-LD, PE-HD usw. zum Einsatz kommen können. Durch die materialeinheitliche Auslegung der Rohrinnenwand 4 aus PE, der Rohraußenwand 5 aus PE und schließlich der geschäumten Zwischenschicht 7, die folgerichtig aus Polyethylenschaum aufgebaut ist, wird ein insgesamt homogenes Temperaturdehnungsverhalten des Rohres beobachtet.

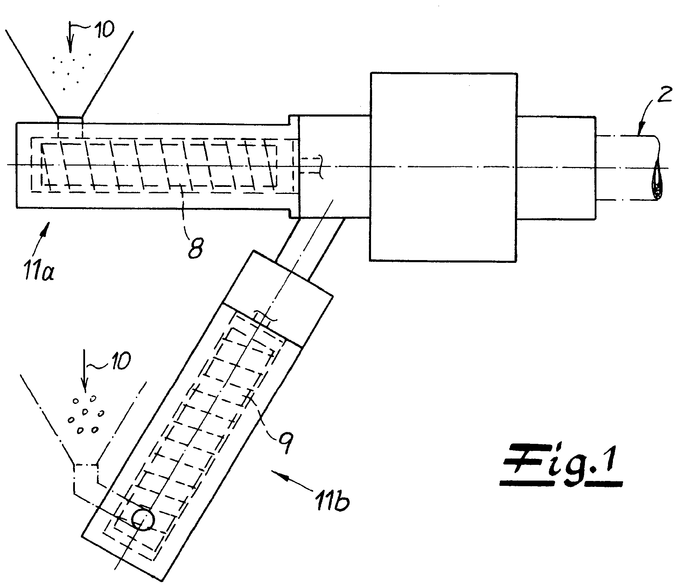

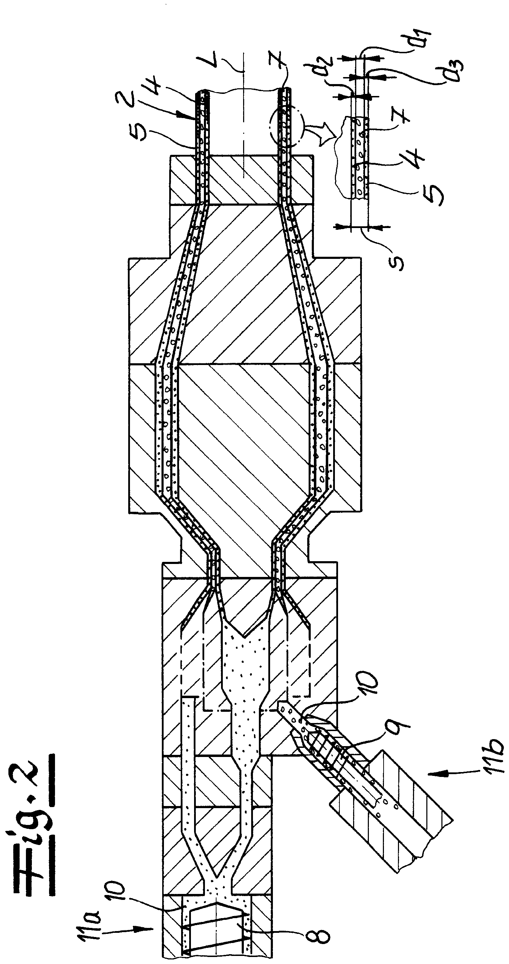

Zur Herstellung des Rohres nach Fig. 3 greift die Erfindung auf ein Formwerkzeug, vorliegend ein Extrusionswerkzeug, zurück, wie es in einer Übersicht in der Fig. 1 und im Detail in der Fig. 2 dargestellt ist. Man erkennt, dass das Formwerkzeug über zwei Förderschnecken 8, 9 verfügt, nämlich eine Förderschnecke 8 zur Herstellung der Rohrinnenwand 4 und Rohraußenwand 5 sowie eine weitere Förderschnecke 9 für die Realisierung der geschäumten Zwischenschicht 7. Beide Förderschnecken 8, 9 sind mit einem in Fig. 1 lediglich angedeuteten Trichter für zugeführtes granulares Ausgangsmaterial 10 ausgerüstet. Bei diesem granularen Ausgangsmaterial 10 handelt es sich um Granulate aus Polyethylen, die in Verbindung mit der Förderschnecke 8 unmittelbar und im Wesentlichen ohne Zusätze verarbeitet werden. Dagegen kommt zur Realisierung der geschäumten Zwischenschicht 7 ein Gemisch an Granulaten zum Einsatz. Dieses Gemisch enthält im Beispielfall ca. 0,1 bis 3 Masse-% eines chemischen Treibmittels und zusätzlich ca. 0,1 bis 3 Masse-% eines physikalischen Treibmittels, jeweils bezogen auf die Gesamtmasse an Granulat, welches für die Rohrherstellung insgesamt erforderlich ist. Folgerichtig beträgt der Anteil an Polyethylen an der Gesamtmasse zur Herstellung des Rohres maximal 99,8 Masse-% (100 Masse-% - 2 x 0,1 Masse-%).

Das Formwerkzeug setzt sich im Detail aus einem Wandextruder 11a und einem Schaumextruder 11b zusammen. Der Schaumextruder 11b und der Wandextruder 11a verfügen über jeweils konzentrisch zueinander angeordnete Auslassdüsen, so dass die den Schaumextruder 11b verlassende geschäumte Zwischenschicht 7 zwischen der Rohrinnenwand 4 und der Rohraußenwand 5 eingeschlossen wird. Sowohl die Rohrinnenwand 4 als auch die Rohraußenwand 5 sind vorliegend glattflächig ausgelegt. Außerdem mögen an der Rohrinnenwand 4 noch parallel verlaufende Gleitrippen 6 vorgesehen sein, welche in Bezug auf die Längsachse L alternierende Richtungen aufweisen. Zur topologischen Anordnung der Gleitrippen 6 an der Rohrinnenwand 4 wird auf die einleitend bereits genannte EP 1 091 463 A1 der Anmelderin verwiesen (vgl. Fig. 3).

Von besonderer Bedeutung ist nun noch der Umstand, dass die geschäumte Zwischenschicht 7 über eine Schichtdicke d₁ von ca. 50 % bis 90 % einer gesamten Wandstärke s des hergestellten Rohres verfügt. Demgegenüber beträgt die Schichtdicke d₂ der Rohrinnenwand 4 und die Schichtdicke d₃ der Rohraußenwand 5 zusammengenommen lediglich 10% bis 50 % der gesamten Schichtdicke s. Im Ausführungsbeispiel sind die Schichtdicken d₂, d₃ von einerseits der Rohrinnenwand 4 und andererseits der Rohraußenwand 5 jeweils gleich ausgelegt.

Auf den konkreten Einzelfall bezogen bedeutet dies, dass die Gesamtschichtdicke s des in der Fig. 3 dargestellten Rohres beispielsweise ca. 5 mm beträgt. Der Durchmesser D des Rohres mag im Bereich von ca. 50 mm angesiedelt sein. Als Folge hiervon stellt sich für das erfindungsgemäße Rohr nach der Fig. 3 ein Rohrgewicht von ca. 0,5 kg/m ein.

Demgegenüber beobachtet man für vergleichbare Rohre aus Vollmaterial, dass heißt Rohre aus Polyethylen ohne geschäumte Zwischenschicht 7 ein Rohrgewicht von in etwa 0,7 kg/m. Dennoch werden für das erfindungsgemäße Rohr mit der geschäumten Zwischenschicht 7, vergleichbare mechanische Eigenschaften beobachtet, wie sie auch für Polyethylenrohre aus Vollmaterial im Beispielfall und entsprechend der DIN 16876 gemessen werden. So ist die Längenänderung des erfindungsgemäßen Rohres gemäß Fig. 3 nach einer Wärmebehandlung auf Werte von ≤ 3 % beschränkt. In der anschließend wiedergegebenen Tabelle ist in diesem Zusammenhang von einer Summe der einzelnen Längenänderungen des betreffenden Rohres die Rede (Σ). Das gilt jedoch nur für den Fall, dass das fragliche Rohr aus einzelnen Teilrohren zusammengesetzt ist. Im Regelfall handelt es sich jedoch um ein durchgängiges Rohr, dessen gesamte Längenänderung nach der Wärmebehandlung auf die fragliche Werte von ≤ 3 % beschränkt ist. Die Zugfestigkeit des Rohres liegt oberhalb von 8.000 N. Eine Zeitstand-Innendruckprüfung bei 35°C und 12 bar hat zur Dichtigkeit über einen Zeitraum von jeweils mehr als 2 Stunden (2 h) geführt.

Weitere Materialkennwerte wie der erreichte E-Modul, die Streckspannung, die Zugfestigkeit und schließlich die Bruchdehnung liegen für ein Rohr aus Vollmaterial nach DIN 16876 und das erfindungsgemäße geschäumte Rohr mit der geschäumten Zwischenschicht 7 in vergleichbaren Bereichen, so dass praktisch identische mechanische Kennwerte und Belastbarkeiten beobachtet werden. D.h., das erfindungsgemäße Rohr mit der geschäumten Zwischenschicht 7 ist von seiner mechanischen Belastbarkeit und seinen mechanischen Eigenschaften her mit Vollwandrohren nach DIN 16876 vergleichbar, wie die anliegend beigefügte Vergleichstabelle deutlich macht.

| | | **Rohre nach DIN 16876** | **geschäumte Rohre nach der Erfindung** |
|---|---|---|---|
| Rohrgewicht | kg/m | ca. 0,7 | ca. 0,5 |
| Maßhaltigkeit (mm) | mm | D = 50,0 | D = 50,0 |
| | | s ≈ 5 | s ≈ 5 |
| Oberflächenbeschaffenheit | | glatte Innen- und Außenflächen | glatte Innen- und Außenflächen |
| Längenänderung nach Wärmebehandlung | % | Σ ≤ 3 | Σ ≤ 3 |
| Veränderung nach Wärmebehandlung | % | keine Risse, Blasen oder Aufblätterungen | keine Risse, Blasen oder Aufblätterungen |
| | | | |
| Zeitstand-Innendruckprüfung 35°C/12 bar | h | > 2 h | > 2 h |
| Zugfestigkeit Rohr | N | > 8000 | > 8000 |
| | | | |
| E-Modul in MPa nach DIN 53457 und ISO 527 | | > 700 | > 500 |
| Streckspannung in MPa nach DIN EN 638 | | ≥ 18 | ≥ 15 |
| Zugfestigkeit in MPa nach DIN EN 638 | | ≥ 20 | ≥ 18 |
| Bruchdehnung in % nach DIN EN 638 | | ≥ 500 | ≥ 300 |

Das geschäumte Rohr gemäß der vorstehenden Tabelle ist ebenso wie das DIN-gemäße Rohr jeweils aus PE (PE-HD) hergestellt worden. Als chemisches Treibmittel wurden 0,5 bis 1,0 Masse-% eines endothermen Treibmittels auf Basis Carbonat/Citrat eingesetzt. Vorteilhaft ist ein solches Treibmittel der Firma Rowa bzw. Tramaco mit der Produktbezeichnung Tracel PO 2201 verwendet worden. Als physikalisches Treibmittel kommen ca. 1,0 Masse-% zum Einsatz. Dabei hat sich als Treibmittel der Typ Tracel G6800 MS ebenfalls der Firma Tramaco als besonders günstig erwiesen. Die Massenanteile beziehen sich jeweils auf die Gesamtmasse an PE-HD zur Herstellung des erfindungsgemäß geschäumten Rohres.

## Patentansprüche

1. Verfahren zur Herstellung eines Rohres, insbesondere eines Kabelführungsrohres, aus einem thermoplastischen Kunststoff, wonach das Rohr mit einem wenigstens dreischichtigen sowie materialeinheitlichen Aufbau aus einer Rohrinnenwand (4), einer geschäumten Zwischenschicht (7) und einer Rohraußenwand (5) ausgerüstet wird, **dadurch gekennzeichnet, dass**
- die Zwischenschicht (7) durch die kombinierte Wirkung zumindest eines chemischen Treibmittels und eines auf Basis expandierender Microsphären hergestellten physikalischen Treibmittels aufgeschäumt wird, wobei
- das chemische und das physikalische Treibmittel einem aufzuschäumenden Granulat zu jeweils 0,1 bis 3 Masse-%, bezogen auf die Gesamtmasse für das Rohr, zugegeben wird, und wobei
- der Mischung aus dem Granulat und den beiden Treibmitteln zusätzlich bis zu 3 Masse-% eines Nukleierungsmittels, bezogen auf die Gesamtmasse für das Rohr, zugegeben wird.

2. Verfahren nach Anspruch 1, **dadurch gekennzeichnet, dass** es sich bei dem chemischen Treibmittel um einen thermisch instabilen Feststoff handelt.

3. Verfahren nach Anspruch 1 oder 2, **dadurch gekennzeichnet, dass** die expandierenden Microsphären als physikalisches Treibmittel eine räumliche Ausdehnung von weniger als 5000 µm, insbesondere weniger als 1000 µm und ganz besonders bevorzugt eine Ausdehnung von 100 µm bis 1000 µm aufweisen.

4. Verfahren nach einem der Ansprüche 1 bis 3, **dadurch gekennzeichnet, dass** die Rohrinnenwand (4) und die Rohraußenwand (5) zusammengenommen mit einer Schichtdicke (d₂ + d₃) von 10 % bis 50 % der Rohrschichtdicke (s) hergestellt werden.

5. Verfahren nach einem der Ansprüche 1 bis 4, **dadurch gekennzeichnet, dass** die geschäumte Zwischenschicht (7) eine Schichtdicke (d₁) von 50 % bis 90 % der gesamten Rohrschichtdicke (s) einnimmt.

6. Verfahren nach einem der Ansprüche 1 bis 5, **dadurch gekennzeichnet, dass** das chemische Treibmittel exotherm oder endotherm ausgelegt ist.

7. Verfahren nach einem der Ansprüche 1 bis 6, **dadurch gekennzeichnet, dass** die Schichtdicke (d₂) der Rohrinnenwand (4) und die Schichtdicke (d₃) der Rohraußenwand (5) in etwa gleich eingestellt werden.

## Claims

1. A method for producing a tube, in particular a cable conduit, from a thermoplastic material, by which the tube is provided with an at least three-layered and materially uniform structure consisting of an inner tube wall (4), a foamed intermediate layer (7) and an outer tube wall (5),
**characterised in that**
- the intermediate layer (7) is foamed by the combined effect of at least one chemical blowing agent and a physical blowing agent produced on the basis of expanding microspheres, wherein
- the chemical and physical blowing agents are each added to granules to be foamed in an amount of 0.1 to 3% by mass in relation to the total mass for the tube, and wherein
- up to 3% by mass of a nucleating agent, in relation to the total mass for the tube, is also added to the mixture of the granules and the two blowing agents.

2. The method according to Claim 1,
**characterised in that**
the chemical blowing agent is a thermally unstable solid.

3. The method according to Claim 1 or 2,
**characterised in that**
the expanding microspheres as the physical blowing agent have a spatial expansion of less than 5000 µm, in particular less than 1000 µm, and very particularly preferably an expansion of 100 µm to 1000 µm.

4. The method according to any one of Claims 1 to 3,
**characterised in that**
the inner tube wall (4) and the outer tube wall (5), taken together, are produced with a layer thickness (d₂ + d₃) of 10% to 50% of the tube layer thickness (s).

5. The method according to any one of Claims 1 to 4,
**characterised in that**
the foamed intermediate layer (7) assumes a layer thickness (d₁) of 50% to 90% of the total tube layer thickness (s).

6. The method according to any one of Claims 1 to 5,
**characterised in that**
the chemical blowing agent is exothermic or endothermic.

7. The method according to any one of Claims 1 to 6,
**characterised in that**
the layer thickness (d₂) of the inner tube wall (4) and the layer thickness (d₃) of the outer tube wall (5) are set to be approximately equal.

## Revendications

1. Procédé pour la fabrication d'un tube, notamment d'un tube de guidage de câbles, composé de matière thermoplastique, selon lequel le tube est équipé d'au moins une structure à trois couches ainsi que du même matériau d'une paroi intérieure de tube (4), d'une couche intermédiaire de mousse (7) et d'une paroi extérieure de tube (5), **caractérisé en ce que**
- la couche intermédiaire (7) est expansée en mousse par l'effet combiné d'au moins un agent porogène chimique et d'un agent porogène physique fabriqué sur la base de microsphères expansées,
- l'agent porogène chimique et l'agent porogène physique étant respectivement ajoutés à un granulat à mettre en mousse à 0,1% à 3% de la masse en se basant sur la masse totale pour le tube, et
- le mélange du granulat et des deux agents porogènes étant ajouté en plus jusqu'à 3% de la masse d'un agent nucléant, en se basant sur la masse totale pour le tube.

2. Procédé selon la revendication 1, **caractérisé en ce que** concernant l'agent porogène chimique, il s'agit d'une substance solide thermiquement instable.

3. Procédé selon la revendication 1 ou 2, **caractérisé en ce que** les microsphères expansées présentent en tant qu'agent porogène une expansion spatiale inférieure à 5000 µm, notamment inférieure à 1000 µm et tout particulièrement de préférence une expansion de 100 µm à 1000 µm.

4. Procédé selon l'une quelconque des revendications 1 à 3, **caractérisé en ce que** la paroi intérieure de tube (4) et la paroi extérieure de tube (5) sont fabriquées réunies avec une épaisseur de couche (d₂+d₃) de 10% à 50% de l'épaisseur de la couche du tube (s).

5. Procédé selon l'une quelconque des revendications 1 à 4, **caractérisé en ce que** la couche intermédiaire de mousse (7) occupe une épaisseur de couche (d₁) de 50% à 90% de l'épaisseur totale de la couche du tube (s).

6. Procédé selon l'une quelconque des revendications 1 à 5, **caractérisé en ce que** l'agent porogène chimique est conçu de façon exotherme ou endotherme.

7. Procédé selon l'une quelconque des revendications 1 à 6, **caractérisé en ce que** l'épaisseur de couche (d₂) de la paroi intérieure de tube (4) et l'épaisseur de couche (d₃) de la paroi extérieure de tube (5) sont établies de façon à peu près identique.
